# EUROPÄISCHE PATENTSCHRIFT

(11) **EP 3 455 014 B1**
(45) Veröffentlichungstag und Bekanntmachung des Hinweises auf die Patenterteilung: **25.03.2020**
(21) Anmeldenummer: 17721540.7
(22) Anmeldetag: 18.04.2017
(51) Int. Cl.: B22F 3/105, B29C 64/153, B29C 64/371, B33Y 30/00, B33Y 80/00

(54) **VORRICHTUNG MIT SCHLEUSE FÜR DIE ADDITIVE HERSTELLUNG**
APPARATUS WITH GUIDING RAIL FOR ADDITIVE MANUFACTURING
APPAREIL AVEC RAIL DE GUIDAGE POUR FABRICATION ADDITIVE

(30) Priorität: 09.05.2016 DE 102016207896
(43) Veröffentlichungstag der Anmeldung: 20.03.2019
(73) Patentinhaber: Siemens Aktiengesellschaft, 80333 München (DE)
(72) Erfinder: OTT, Michael, 45470 Mülheim an der Ruhr (DE)
(86) Internationale Anmeldenummer: PCT/EP2017/059142
(87) Internationale Veröffentlichungsnummer: WO 2017/194274

(56) Entgegenhaltungen:
- WO-A2-2008/128502
- DE-A1-102011 122 141
- US-A- 5 437 820
- US-A1- 2014 048 971

## Beschreibung

Die vorliegende Erfindung betrifft eine Vorrichtung für die pulverbasierte additive Herstellung eines Bauteils sowie eine Anlage umfassend die Vorrichtung. Weiterhin wird ein entsprechendes Verfahren zur additiven Herstellung des Bauteils beschrieben.

Das Bauteil kann für den Einsatz in einer Strömungsmaschine, vorgesehen sein, vorzugsweise einer Gasturbine. Besonders bevorzugt betrifft die vorliegende Offenbarung weiterhin Bauteile mit einem besonders großen Aspektverhältnis beziehungsweise Bauteile, welche über eine große Länge additiv aufzubauen sind.

Generative oder additive Herstellungsverfahren sind beispielsweise das Laserauftragschweißen (LMD) oder das selektive Laserschmelzen (SLM).

Ein Verfahren zum additiven Aufbau von Bauteilen mittels selektiven Laserschmelzens ist beispielsweise aus EP 2 910 362 A1 bekannt.

Weiterhin ist aus US 5 437 820 A ein Verfahren zum Herstellen eines dreidimensionalen Produktes bekannt.

Zur Herstellung eines Bauteiles aus einem Pulverbett heraus, beispielsweise mittels SLM, wird das Pulverbett beispielsweise mit einem Laserstrahl gemäß dem Design einer entsprechenden CAD-Datei bestrahlt.

Additive Fertigungsverfahren haben sich als besonders vorteilhaft für komplexe oder kompliziert oder filigran designte Bauteile, beispielsweise Leichtbau-Strukturen erwiesen. Die additive Fertigung ist insbesondere durch eine besonders kurze Kette von Prozessschritten vorteilhafter, wobei ein Herstellungs- oder Fertigungsschritt des entsprechenden Bauteils direkt auf Basis der CAD-Datei erfolgen kann.

Weiterhin ist die additive Fertigung besonders vorteilhaft für die Entwicklung oder Herstellung von Prototypen, welche beispielsweise aus Kostengründen mittels konventioneller subtraktiver oder spanender Fertigung oder Guss-Verfahren nicht oder nicht effizient hergestellt werden können.

Derzeit sind die Designs der Bauteile, insbesondere hinsichtlich ihrer Abmessungen, durch die Auslegung der kommerziell verfügbaren Anlagen beschränkt, welche insbesondere nur einen begrenzten Bauraum zur Verfügung bieten. Derzeit verfügbare SLM-Anlagen besitzen zumeist festgelegte Bauraumgrößen. Typische Abmessungen für den Bau- oder Herstellungsraum betragen beispielsweise 250 mm x 250 mm x 250 mm. Die Bauraumgrößen können beispielsweise durch die Größe oder Fläche einer Bauplattform (mit)bestimmt sein.

Derzeit sind entsprechende Herstellungsanlagen jedenfalls auf ein Bauvolumen von ca. 1000 mm x 1000 mm x 1000 mm beschränkt. Insbesondere bei der Herstellung langer oder entlang hauptsächlich einer Achse ausgedehnter Bauteile wird die komplette Bauraumfläche jedoch nicht benötigt. Folglich muss sehr viel Pulver für die Herstellung des entsprechenden Bauteils verwendet und insbesondere im Bauraum angeordnet oder bewegt werden. Nur ein Bruchteil des genannten Pulvers ist weiterhin für den eigentlichen Aufbau des Bauteils notwendig. Dies stellt einen wesentlichen Nachteil für die Technologie der additiven Herstellung dar, da das Pulver nicht nur teuer ist, sondern jedwede unnötige (weitere) Verwendung des Pulvers nachteilhaft für das Bauteil als auch für das Verfahren sein kann. Insbesondere wird nicht zum Bauteil verarbeitetes Pulver für jeden additiven Herstellungsprozess durch die Herstellungsbedingungen thermisch belastet, beispielsweise durch einen Laser, was zu einem Alterungsprozess und damit zu einer Verschlechterung der physikalischen Eigenschaften des Pulvers führen kann.

Weiterhin muss beispielsweise eine große Pulvermenge bevorratet werden, wobei sich die Qualität des Pulvers bei jedem (erneuten) Erwärmen des Pulvers im Bauraum durch eine teilweise Oxidation und/oder durch die Aufnahme von Luftfeuchtigkeit verschlechtern kann. Dies ist insbesondere bei der additiven Herstellung von Komponenten für den Einsatz im Heißgaspfad einer Turbine kritisch, wo schon geringe Mengen an Sauerstoff beispielsweise die Ausbildung gewünschter oder erforderlicher Materialphasen (beispielsweise der γ- oder y'-Phase einer nickel- oder kobaltbasierten Superlegierung) verhindern können.

Es ist daher eine Aufgabe der vorliegenden Erfindung, Mittel anzugeben, mit denen die Herstellung von Bauteilen mit einem besonders großen Aspektverhältnis in zumindest einer Richtung besonders einfach bewerkstelligt werden kann.

Diese Aufgabe wird durch den Gegenstand der unabhängigen Patentansprüche gelöst. Vorteilhafte Ausgestaltungen sind Gegenstand der abhängigen Patentansprüche.

Ein Aspekt der vorliegenden Erfindung betrifft eine Vorrichtung für die pulverbettbasierte, additive Herstellung eines oder mehrerer Bauteile.

Die Vorrichtung umfasst eine Bauraumwandung, welche einen Bauraum, beispielsweise einer entsprechenden Herstellungsanlage, zumindest teilweise definiert. Die Bauraumwandung kann eine Teilwand des Bauraums sein. Die Bauraumwandung ist vorzugsweise eingerichtet, den Bauraum von einem Außenbereich zu trennen und/oder eine Geometrie des Pulverbettes zu definieren, wobei die Bauraumwandung eine Schleuse aufweist, welche wiederum eingerichtet ist, ein schichtweise aufzubauendes oder herzustellendes Bauteil während einer additiven Herstellung von dem Bauraum zumindest teilweise durch die Schleuse in einen Außenbereich zu führen, so dass das aufzubauende Bauteil entlang zumindest einer Führungsrichtung über eine Dimension oder Abmessung des Bauraums hinaus aufgebaut werden kann.

Die genannte Führung erfolgt entlang einer Führungsrichtung.

Der Außenbereich ist ein Bereich außerhalb des Bauraums, welcher beispielsweise ständig einer Umgebungs- und vorzugsweise keiner Prozess- oder Herstellungsatmosphäre, beispielsweise einem Inertgas, ausgesetzt ist.

Durch die beschriebene Vorrichtung kann mit Vorteil ein kontinuierlicher und/oder ununterbrochener additiver Aufbau eines Bauteils oder einer Kette von Bauteilen ermöglicht werden, wobei das Bauteil bzw. Teil-Abschnitte desselben automatisch während des additiven Aufbaus aus dem Bauraum ausgeschleust werden können. Dadurch kann mit Vorteil die additive pulverbettbasierte Herstellung von Bauteilen im Allgemeinen entsprechend vereinfacht und somit die additive Fertigungstechnologie entscheidend verbessert werden.

Die Bauraumwandung definiert den Bauraum seitlich oder entlang eines Umfangs des Bauraums. Diese Umfangsrichtung kann beispielsweise senkrecht zu einer Aufbaurichtung des Bauteils angeordnet sein oder verlaufen. Die Bauraumwandung weist weiterhin eine, insbesondere verschließbare Öffnung auf, durch welche das schichtweise aufzubauende Bauteil in den Außenbereich geführt werden kann.

Die Schleuse ist ausgebildet, ein zumindest teilweise in der Öffnung angeordnetes Bauteil gegen ein Ausgangsmaterial, nämlich ein Pulver, für das Bauteil während der additiven Herstellung sowie gegen eine Herstellungsatmosphäre zu dichten oder abzudichten. Diese Ausgestaltung ist zweckmäßig, um das Pulver in der Anlage zu halten, sowie um einen Kontakt des Ausgangsmaterials mit einer Umgebungsatmosphäre zweckmäßigerweise zu verhindern.

In einer Ausgestaltung weist die Vorrichtung eine Führung auf, welche eingerichtet ist, das schichtweise aufzubauende Bauteil während der additiven Herstellung entlang der Führungsrichtung von dem Bauraum in den Außenbereich zu führen, wobei die Führungsrichtung mit einer durch eine Aufbaurichtung des Verfahrens definierte Richtung einem Winkel zwischen 30 und 60° einschließt. Gemäß dieser Ausgestaltung kann das beschriebene "Ausschleusen" besonders zweckmäßig ermöglicht werden. Insbesondere kann das Herausführen oder Ausschleusen des Bauteils oder deren Teilbereiche hinsichtlich der Führungsrichtung auf einen Winkelbereich (oder entsprechenden Raumwinkelbereich) von mehr als 90° relativ zu der Aufbaurichtung beschränkt sein. Dies gilt insbesondere für pulverbettbasierte Herstellungsverfahren, welche eine definierte Aufbaurichtung haben.

In einer Ausgestaltung fungiert die Führung als Stützeinrichtung zum Stützen eines Teilabschnitts des Bauteils, welcher während der additiven Herstellung bereits in den Außenbereich hinausgeführt wurde.

In einer Ausgestaltung ist die Führung ausgebildet, den Teilabschnitt entsprechend abzustützen.

In einer Ausgestaltung umfasst die Vorrichtung eine Plattform, beispielsweise eine Hilfsplattform, welche eingerichtet ist, in einer Anfangsphase des schichtweisen Aufbaus mithilfe der beschriebenen Vorrichtung, als Substrat zu dienen, wobei die Plattform weiterhin ausgebildet ist, von dem Bauraum durch die Schleuse in den Außenbereich geführt zu werden.

In einer Ausgestaltung umfasst die Vorrichtung weiterhin eine Fixierungseinrichtung, welche ausgebildet ist, ein bereits vorgefertigtes, jedoch beispielsweise weiterhin schichtweise aufzubauendes Bauteil für den schichtweisen Aufbau in dem Bauraum zu fixieren.

Ein weiterer Aspekt der vorliegenden Erfindung betrifft eine Anlage zur pulverbettbasierten additiven Herstellung umfassend oder definierend einen Bauraum, und eine Verfestigungseinrichtung zum Verfestigen bzw. Aufbauen des Bauteils, nämlich aus dem Pulverbett, sowie einen Schieber zum Auftragen von Schichten von Ausgangsmaterial für den schichtweisen Aufbau.

Ein weiterer Aspekt der vorliegenden Erfindung betrifft ein Verfahren zur pulverbettbasierten, additiven Herstellung eines Bauteils in der Anlage, umfassend das Bereitstellen eines ersten Abschnitts des schichtweise herzustellenden Bauteils in dem Bauraum und das anschließende schichtweise Aufbauen eines sich an den ersten Abschnitt anschließenden zweiten Abschnitts, wobei ein bereits aufgebauter Teilabschnitt des Bauteils schichtweise von dem Bauraum durch die Schleuse in den Außenbereich geführt (hinausgeführt) wird, insbesondere sobald der erste Abschnitt die Abmessung des Bauraums zu überschreiten droht.

Der Ausdruck "schichtweise" bedeutet im Kontext des Hinausführens des Teilabschnitts, dass die beschriebene Führung zum Führen des entsprechenden Teilabschnitts schrittweise oder schichtweise bewegt wird.

In einer Ausgestaltung wird der erste Abschnitt des Bauteils, insbesondere auf einer Plattform, in dem Bauraum schichtweise aufgebaut, ohne dass dabei ein Teilabschnitt des Bauteils in den Außenbereich geführt wird.

In einer Ausgestaltung ist der erste Abschnitt des Bauteils eine vorgefertigte Komponente.

In einer Ausgestaltung wird ein Teilabschnitt des Bauteils, welcher bereits von dem Bauraum in den Außenbereich hinausgeführt wurde, schichtweise von einer Führung oder Stützeinrichtung entlang der Führungsrichtung geführt und schichtweise zum Führen beziehungsweise Abstützen des Bauteils umgesetzt oder umpositioniert, vorzugsweise während einer Beschichtung des Verfahrens, beispielsweise mittels des beschriebenen Schiebers. Dafür kann die Vorrichtung einen entsprechenden Roboterarm oder Greifer umfassen.

In einer Ausgestaltung wird das Bauteil während der additiven Herstellung derart mit einer Sollbruchstruktur versehen, beispielsweise umfassend Perforationen oder Hohlräume, dass ein Teilabschnitt des Bauteils, welcher bereits von dem Bauraum in den Außenbereich hinausgeführt wurde, für einen kontinuierlichen schichtweisen Aufbau vom Bauteil abgetrennt werden kann, beispielsweise senkrecht zur Führungsrichtung. Durch diese Ausgestaltung kann mit Vorteil eine quasi unbegrenzte Anzahl von Bauteilen innerhalb eines Aufbauschrittes oder - prozesses aufgebaut werden, ohne dass das Verfahren unterbrochen werden müsste.

In einer Ausgestaltung wird dem Bauraum für einen kontinuierlichen, schichtweisen Aufbau kontinuierlich neues Ausgangsmaterial für das Bauteil zugeführt. Diese Ausgestaltung ermöglicht ebenfalls mit Vorteil einen möglichst fließenden und kontinuierlichen additiven Aufbau.

Ausgestaltungen, Merkmale und/oder Vorteile, die sich vorliegend auf die Vorrichtung oder die Anlage beziehen, können ferner das Verfahren bzw. das Bauteil betreffen oder umgekehrt.

Weitere Einzelheiten der Erfindung werden nachfolgend anhand der Figuren beschrieben.
- Figur 1: zeigt eine schematische perspektivische Ansicht einer erfindungsgemäßen Vorrichtung bzw. einer Anlage zur additiven Herstellung.
- Figur 2: zeigt eine schematische Schnitt- oder Seitenansicht der Vorrichtung bzw. Anlage aus Figur 1.

Anhand der Figuren werden weiterhin ein erfindungsgemäßes Verfahren zur additiven Herstellung sowie ein entsprechend hergestelltes oder herstellbares Bauteil beschrieben.

In den Ausführungsbeispielen und Figuren können gleiche oder gleich wirkende Elemente jeweils mit den gleichen Bezugszeichen versehen sein. Die dargestellten Elemente und deren Größenverhältnisse untereinander sind grundsätzlich nicht als maßstabsgerecht anzusehen, vielmehr können einzelne Elemente, zur besseren Darstellbarkeit und/oder zum besseren Verständnis übertrieben dick oder groß dimensioniert dargestellt sein.

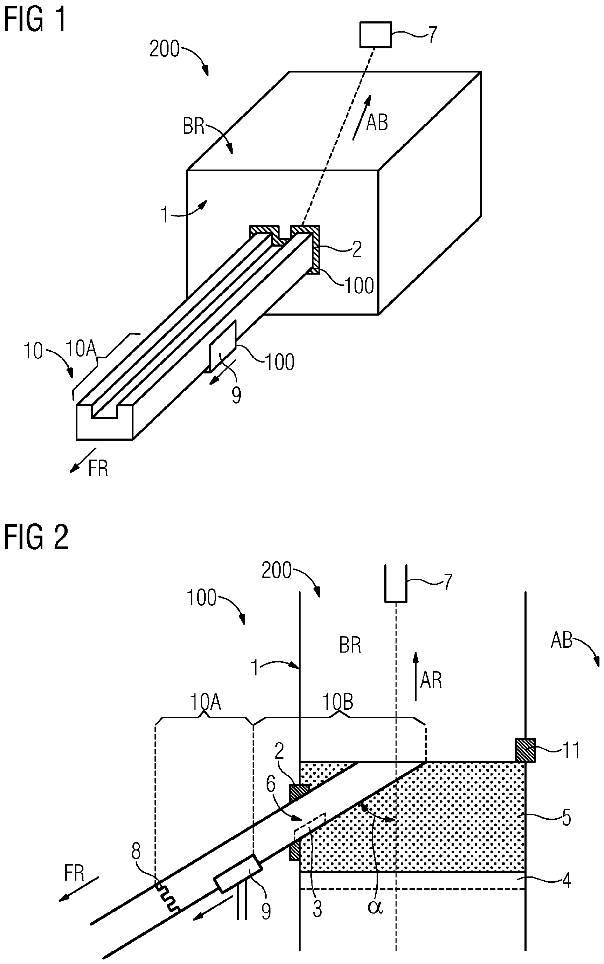

Figur 1 zeigt eine Anlage 200. Die Anlage 200 ist eine Anlage, zur pulverbettbasierten, additiven Herstellung eines Bauteils 10.

Mit dem "Bauteil" kann vorliegend ein zumindest teilweise noch aufzubauendes als auch ein fertig hergestelltes Bauteil bezeichnet sein.

Vorzugsweise ist die Anlage 200 eine Anlage zur additiven Herstellung von Bauteilen mittels selektivem Laserschmelzen (SLM), selektivem Lasersintern (SLS) oder Elektronenstrahlschmelzen (EBM).

Die Anlage 200 umfasst gemäß der vorliegenden Erfindung eine Vorrichtung 100 (vergleiche Figur 2). Die Vorrichtung 100 umfasst eine Bauraumwandung 1. Die Bauraumwandung 1 kann eine Teilwand sein, welche einen Bauraum BR der Anlage 200 zumindest teilweise definiert. Vorzugweise ist oder umfasst die Bauraumwandung 1 eine Seitenwand, welche den Bauraum BR beispielsweise seitlich begrenzt und ein Ausgangsmaterial (vergleiche Bezugszeichen 5) für das Bauteil vorhält.

Die Bauraumwandung 1 umfasst weiterhin eine Schleuse 2. Die Schleuse 2 ist eingerichtet, das schichtweise aufzubauende oder herzustellende Bauteil 10 während einer additiven Herstellung von dem Bauraum BR zumindest teilweise durch die Schleuse 2 in einen Außenbereich AB, d.h. einen Bereich außerhalb des Bauraums BR, zu führen. Mit anderen Worten wird das Bauteil während der additiven Herstellung von dem Bauraum BR durch die Schleuse 2 in den Außenbereich AB (hinaus)geführt. Dies erfolgt zweckmäßigerweise entlang einer Führungsrichtung FR (vergleiche Figur 2).

Zweckmäßigerweise weist die Schleuse weiterhin eine Öffnung 6, zum Heraus- oder Hindurchführen des Bauteils 10 auf.

Die Anlage 200 umfasst weiterhin eine Verfestigungseinrichtung 7. Die Verfestigungseinrichtung 7 kann eine Laser- oder Elektronenstrahleinheit zum Verfestigen eines Ausgangsmaterials (vergleiche Bezugszeichen 5 in Figur 2) sein. Die Verfestigungseinrichtung 7 kann eine Strahlschmelzvorrichtung sein für ein entsprechendes additives Herstellungsverfahren. Ein Energiestrahl, beispielsweise ein Laser- oder Elektronenstrahl ist ausgehend von der Verfestigungseinrichtung 7 durch die gestrichelte Linie angedeutet.

Es ist in Figur 1 weiterhin gezeigt, dass das Bauteil 10 sich teilweise sowohl in dem Bauraum BR und in den Außenbereich AB befindet. Insbesondere ist ein Abschnitt 10A außerhalb des Bauraums BR gezeigt, während ein Bereich oder Teilabschnitt 10B zumindest teilweise innerhalb des Bauraums BR gezeigt ist.

Der zweite Abschnitt 10 ist in dem Außenbereich AB angeordnet, wobei derjenige Bereich des Bauteils 10, welcher - aufgrund seiner Abmessungen - nicht mehr in den Bauraum BR "passt" durch die Schleuse 2 in den Außenbereich AB geführt wurde.

Der erste Abschnitt 10A ist vorzugsweise derart bemessen, dass er vollständig in den Bauraum BR passt, bzw. das Bauteil sich in etwa über den Bereich 10A erstreckend vollständig innerhalb des Bauraums BR aufgebaut werden konnte.

Das Bauteil 10 oder zumindest ein Teilabschnitt (vergleiche Bezugszeichen 10A, 10B) desselben, wird derart aus dem Bauraum BR durch die Schleuse 2 in den Außenbereich AB geführt, dass zumindest der Teil des Bauteils, welcher sich aktuell direkt in der Schleuse 2 sich in der Öffnung 6 befindet, gegen ein Ausgangsmaterial 5, bzw. das Pulver für das genannte Pulverbett gedichtet oder abgedichtet wird, so dass kein Pulver während der additiven Herstellung von dem Bauraum BR in den Außenbereich AB gelangen kann.

Die genannte Dichtung kann beispielsweise durch Bürsten bewerkstelligt werden, welche beispielsweise die Schleuse 2 bilden oder von dieser umfasst sind. Insbesondere kann die Öffnung an einer Innenseite mit den genannten Bürsten (nicht explizit gekennzeichnet) versehen sein. Beispielsweise kann es sich um metallbürsten handeln, vorzugsweise sogar aus einem hochwarmfesten Metall, wie einer Superlegierung. Die bürsten können sich weiterhin vorteilhafterweise an einen Querschnitt des Bauteils, welcher vorzugsweise durch die Öffnung 6 geführt wird, anpassen und so eine Dichtung erzeugen. In Figur 1 ist beispielsweise ein eckiger Querschnitt des Bauteils 10 gezeigt, welche eine rechteckige Kontur hat und eine Ausnehmung (nicht weiter gekennzeichnet). Alternativ kann das Bauteil beliebige Querschnittsformen aufweisen, beispielsweise einen runden Querschnitt aufweisen.

Weiterhin wird das Bauteil entsprechend gegen eine Herstellungsatmosphäre, beispielsweise ein Inertgas enthaltend, gedichtet oder abgedichtet.

Das genannte Herausführen hat den Vorteil, dass, zumindest entlang der Führungsrichtung FR das Bauteil quasi beliebig ausgedehnt hergestellt werden kann und insbesondere der Bauraum BR keine Einschränkung für die Dimension oder Abmessung des Bauteils 10 darstellt, wie dies bei konventionellen Vorrichtung oder Anlagen für die additive Herstellung der Fall ist.

Zur Erleichterung der Führung weist die Vorrichtung 100 vorzugsweise eine Führung oder Führungseinrichtung 9 auf, welche eingerichtet ist, das Bauteil genau entlang der Führungsrichtung FR zu führen und gegebenenfalls vorzugsweise ebenfalls abzustützen.

Die Führung 9 kann ein Bewegungsaktuator bzw. eine Stütze zum schrittweisen oder schichtweisen Führen zumindest des Abschnitts 10B des Bauteils 10 darstellen.

Die Führungsrichtung FR schließt vorzugsweise mit einer vertikalen Achse oder einer durch die Aufbaurichtung AB des pulverbettbasierten Verfahrens definierte Achse einen Winkel zwischen 30 und 60° ein.

Figur 2 zeigt eine schematische Schnittansicht der Vorrichtung 100 bzw. Anlage 200 sowie des erfindungsgemäßen pulverbettbasierten additiven Herstellungsverfahrens, wobei einzelne Aspekte im Gegensatz zu Figur 1 verdeutlicht dargestellt sind.

Es ist in Figur 2 gezeigt, dass der Bauraum BR zum additiven Aufbau des Bauteils 10 aus einem Pulverbett, teilweise mit einem granularen oder pulverförmigen Ausgangsmaterial 5 gefüllt ist. Das Ausgangsmaterial kann alternativ entsprechend unter dem eigentlichen Bauraum BR auf einer Bauplattform 4 angeordnet sein.

Es ist weiterhin in Figur 2 zu erkennen, dass die Führungsrichtung FR einen Winkel α zu einer durch die Aufbaurichtung

AR definierten Achse einschließt. Diese Ausgestaltung impliziert die Ausbildung eines Winkels von mehr als 90° zwischen der Führungsrichtung FR und einer Aufbaurichtung AR, welche im Falle von pulverbettbasierten Verfahren notwendig sein kann.

Zum Auftragen des Ausgangsmaterials 5 oder Pulvers weist die Anlage 200 vorzugsweise einen Schieber 11 auf, welcher nach jedem Verfestigungs- oder Belichtungsschritt mittels der Verfestigungseinrichtung 7 neues Pulver aus einem Pulvervorrat (nicht explizit dargestellt) schichtweise aufträgt bzw. auf dem Bauteil 10 verteilt.

Bei konventionellen Anlagen wird anschließend an die Beschichtung, die Bauplattform 4 vorzugsweise um eine der aufgetragenen und/oder verfestigten Schichtdicke entsprechenden Länge abgesenkt.

Im Folgenden wird die erfindungsgemäße additive Herstellung des Bauteils 10 beschrieben:
Die Merkmale der vorliegenden Erfindung sind insbesondere bei Bauteilen zweckmäßig, welche ein besonders großes Aspektverhältnis, beispielsweise ein Aspektverhältnis von mindestens 3 zu 1 (3:1), vorzugsweise 10 zu 1 oder größer aufweisen. Mit anderen Worten sind die mittels der Vorrichtung 100 hergestellten Bauteile vorzugsweise besonders lang, vorzugsweise länger als die Dimensionen oder Abmessung des Bauraums BR entlang der Führungsrichtung FR.

Gemäß des erfindungsgemäßen Verfahrens wird vorzugsweise zunächst ein erster (Teil-)Abschnitt 10A des Bauteils 10, vorzugsweise vollständig, in dem Bauraum BR aus dem Pulverbett aufgebaut oder hergestellt. Aufgrund des fortgeschrittenen Stadiums der additiven Herstellung ist dieser Abschnitt in der Darstellung der Figur 2 bereits komplett von dem Bauraum BR in den Außenbereich AB herausgeführt worden.

Für eine Anfangsphase des additiven Aufbaus weist die Vorrichtung 100 vorzugsweise eine Plattform oder Hilfsplattform 3 auf, welche in dieser Phase, für die pulverbettbasierte Herstellung als Substrat dienen kann.

Die Plattform 3 kann beispielsweise zusätzlich zu der beschriebenen weiteren Bauplattform 4 vorgesehen sein, wobei die Bauplattform 4 vorzugsweise eine herkömmliche oder konventionelle Plattform ist.

Das Bezugszeichen 3 kennzeichnet die Position der Plattform 3 in einer Anfangsphase des Herstellungsverfahrens anhand gestrichelter Linien. Das abgeschiedene Material (verfestigtes Ausgangsmaterial) für das Bauteil 10 wird vorzugsweise stoffschlüssig mit der Plattform 3 verbunden. Nach dem additiven Aufbau kann die Plattform durch entsprechende Mittel vorzugsweise wieder von der Bauteilstruktur getrennt werden.

Die oben genannte Führung 9 kann weiterhin die Plattform 3 umfassen oder mit dieser gekoppelt oder verbunden sein.

Sobald eine bestimmte Abmessung des Bauteils 10 während der additiven Herstellung also über die Bauraumwandung 1 hinaus aufgebaut werden soll, wird ein entsprechender Teilbereich des Bauteils zweckmäßigerweise durch die Schleuse 2 geführt, d.h. über die Führung 9 und/oder die Plattform 3, aus dem Bauraum BR in den Außenbereich AB herausgeführt. Dies geschieht simultan während der additiven Herstellung und schritt- bzw. schichtweise.

Während bei konventionellen Anlagen die weitere Plattform 4 um das der aufgetragenen Schichtdicke entsprechende Maß abgesenkt wird, wird vorliegend die Führung 9 schrittweise um eine entsprechende Länge weiter entlang der Führungsrichtung FR schrittweise bewegt.

Die Führung 9 kann beispielsweise einen Greifer und/oder einen Roboterarm umfassen. Die Führung 9 und/oder der genannte Greifer ist vorzugsweise derart eingerichtet, dass dieser zum Abstützen eines bereits aus dem Bauraum BR herausgeführten Teilabschnitts des Bauteils 10 umgesetzt oder umpositioniert werden kann, wenn der herausgeführte Abschnitt zu lang wird und droht, sich zu verbiegen oder zu brechen. Die genannte Umsetzung erfolgt vorzugsweise während einer Beschichtungsphase, d.h. während des Auftragens einer neuen anschließend zu verfestigenden Schicht von Ausgangsmaterial 5 mittels des Schiebers 11, um den additiven Aufbau mit Vorteil zeiteffizient und zweckmäßig ablaufen zu lassen.

Zum Abstützen können erfindungsgemäß auch eine Mehrzahl von Führungseinrichtungen oder Greifeinrichtungen bei der Vorrichtung 100 vorgesehen sein.

Als Alternative zu der vollständigen additiven Fertigung des Bauteils 10 kann das Bauteil 10 oder ein Abschnitt desselben auch ausgehend von einer vorgefertigten Komponente hergestellt werden. Vorzugsweise ist die Abmessung dieser vorgefertigten Komponente nicht größer als der oben beschriebene Abschnitt 10A und/oder nicht größer als der Bauraum BR, so dass diese Komponente in der Anfangsphase des additiven Aufbaus in dem Bauraum BR angeordnet werden kann.

Zum Fixieren der vorgefertigten Komponente oder des vorgefertigten Bauteils kann die Vorrichtung 100 beispielsweise durch dem Fachmann bekannte Mittel in dem Bauraum BR entsprechend fixiert werden.

Gemäß der vorliegenden Offenbarung kann das Bauteil - im Unterschied zu konventionellen Herstellungsverfahren bzw. -anlagen - vorteilhafterweise mit unbegrenzter Länge oder Ausdehnung entlang der Führungsrichtung FR aufgebaut werden.

Dazu umfasst die beschriebene Anlage 200 vorzugsweise eine kontinuierliche Pulverzuführung bzw. eine entsprechende Einrichtung (nicht explizit dargestellt), mit der beispielsweise der additive Herstellungsprozess nicht durch das Auffüllen entsprechender Pulverbehälter unterbrochen werden muss.

Die vorliegende Erfindung ermöglicht in diesem Sinne eine Art "Fließbandherstellung" von gleichartigen Bauteilen, indem die hergestellte oder aufgebaute Struktur vorzugsweise an Trennstellen benachbart aufgebauter Bauteile während der additiven Herstellung mit einer Sollbruchstruktur 8 (Sollbruchstelle) versehen wird. Ebenfalls während der additiven Herstellung können dann sukzessive einzelne Teilabschnitte als separate Bauteile, beispielsweise auf einfache Weise mechanisch abgetrennt werden.

## Patentansprüche

1. Vorrichtung (100) für die pulverbettbasierte additive Herstellung umfassend:
eine Bauraumwandung (1), welche einen Bauraum (BR) definiert und eingerichtet ist, den Bauraum (BR) von einem Außenbereich (AB) zu trennen, wobei die Bauraumwandung (1) eine Schleuse (2) aufweist, welche eingerichtet ist, ein schichtweise aufzubauendes Bauteil (10) während einer additiven Herstellung von dem Bauraum (BR) zumindest teilweise durch die Schleuse (2) in einen Außenbereich (AB) zu führen, so dass das Bauteil (10) entlang zumindest einer Führungsrichtung (FR) über eine Dimension des Bauraums (BR) hinaus aufgebaut werden kann, wobei die Bauraumwandung (1) den Bauraum (BR) seitlich definiert, wobei die Bauraumwandung (1) eine Öffnung (6) aufweist, durch welche das Bauteil (10) in den Außenbereich (AB) geführt werden kann, und wobei die Schleuse (2) ausgebildet ist, ein zumindest teilweise in der Öffnung (6) angeordnetes Bauteil (10) gegen ein Ausgangsmaterial (5) für das Bauteil (10) während der additiven Herstellung sowie gegen eine Herstellungsatmosphäre zu dichten.

2. Vorrichtung (100) gemäß einem der vorhergehenden Ansprüche, welche eine Führung (9) aufweist, welche eingerichtet ist, das Bauteil (10) während der additiven Herstellung entlang der Führungsrichtung (FR) von dem Bauraum (BR) in den Außenbereich (AB) zu führen, wobei die Führungsrichtung (FR) mit einer durch eine Aufbaurichtung (AR) des Verfahrens definierten Richtung einen Winkel zwischen 30 und 60° einschließt.

3. Vorrichtung (100) gemäß Anspruch 2, wobei die Führung (9) als Stützeinrichtung fungiert und ausgebildet ist, einen Teilabschnitt des Bauteils (10), welcher während der additiven Herstellung bereits in den Außenbereich (AB) hinausgeführt wurde, abzustützen.

4. Vorrichtung (100) gemäß einem der vorhergehenden Ansprüche, weiterhin umfassend eine Plattform (3), welche eingerichtet ist, in einer Anfangsphase des schichtweisen Aufbauens des Bauteils als Substrat zu dienen, wobei die Plattform (3) weiterhin ausgebildet ist, von dem Bauraum (BR) durch die Schleuse (2) in den Außenbereich (AB) geführt zu werden.

5. Anlage (200) zur additiven Herstellung, umfassend einen Bauraum (BR), die Vorrichtung (100) gemäß einem der vorhergehenden Ansprüche, eine Verfestigungseinrichtung (7) zum Aufbauen des Bauteils (10) sowie einen Schieber (11) zum Auftragen von Schichten von Ausgangsmaterial (5) für den schichtweisen Aufbau.

6. Verfahren zur pulverbettbasierten, additiven Herstellung eines Bauteils mittels einer Vorrichtung (100) gemäß einem der vorhergehenden Ansprüche und/oder in einer Anlage (200) gemäß Anspruch 5, umfassend die folgenden Schritte:
- Bereitstellen eines ersten Abschnitts (10A) des schichtweise herzustellenden Bauteils (10) in dem Bauraum (BR), und
- schichtweises Aufbauen eines sich an den ersten Abschnitt (10A) anschließenden zweiten Abschnitts (10B), wobei ein bereits aufgebauter Teilabschnitt des Bauteils 10 schichtweise von dem Bauraum (BR) durch die Schleuse (2) in den Außenbereich (AB) geführt wird.

7. Verfahren gemäß Anspruch 6, wobei der erste Abschnitt (10A) des Bauteils (10) in dem Bauraum (BR) schichtweise aufgebaut wird, ohne dass dabei ein Teilabschnitt des Bauteils 10 in den Außenbereich (AB) geführt wird.

8. Verfahren gemäß Anspruch 6 oder 7, wobei der erste Abschnitt (10A) des Bauteils (10) eine vorgefertigte Komponente ist.

9. Verfahren gemäß einem der Ansprüche 6 bis 8, wobei ein Teilabschnitt des Bauteils (10), welcher bereits von dem Bauraum (BR) in den Außenbereich (AB) hinausgeführt wurde, schichtweise von einer Führung entlang der Führungsrichtung (FR) geführt und schichtweise zum Führen des Bauteils umgesetzt wird.

10. Verfahren gemäß einem der Ansprüche 6 bis 9, wobei das Bauteil (10) während der additiven Herstellung derart mit einer Sollbruchsstruktur (8) versehen wird, so dass ein Teilabschnitt des Bauteils (10), welcher bereits von dem Bauraum (BR) in den Außenbereich (AB) hinausgeführt wurde, für einen kontinuierlichen, schichtweisen Aufbau vom Bauteil (10) abgetrennt werden kann.

11. Verfahren gemäß einem der Ansprüche 6 bis 10, wobei dem Bauraum (BR) für einen kontinuierlichen, schichtweisen Aufbau kontinuierlich neues Ausgangsmaterial (5) für das Bauteil (10) zugeführt wird.

## Claims

1. Device (100) for powder-bed-based additive manufacturing, comprising:
a building space wall (1) which defines a building space (BR) and is designed to separate the building space (BR) from an outside region (AB), wherein the building space wall (1) has a hatch (2) which is designed to guide at least partially a component (10) to be built up in layers from the building space (BR) through the hatch (2) into an outside region (AB) during an additive manufacturing operation, with the result that the component (10) can be built up along at least one guide direction (FR) beyond a dimension of the building space (BR), wherein the building space wall (1) laterally defines the building space (BR), wherein the building space wall (1) has an opening (6) through which the component (10) can be guided into the outside region (AB), and wherein the hatch (2) is designed to seal a component (10) arranged at least partially in the opening (6) with respect to a starting material (5) for the component (10) during the additive manufacturing and with respect to a manufacturing atmosphere.

2. Device (100) according to one of the preceding claims, which has a guide (9) which is designed to guide the component (10) along the guide direction (FR) from the building space (BR) into the outside region (AB) during the additive manufacturing operation, wherein the guide device (FR) encloses an angle of between 30 and 60° with a direction defined by a buildup direction (AR) of the method.

3. Device (100) according to Claim 2, wherein the guide (9) functions as a supporting device and is designed to support a subportion of the component (10) which has already been guided out into the outside region (AB) during the additive manufacturing operation.

4. Device (100) according to one of the preceding claims, further comprising a platform (3) which is designed to serve as a substrate in an initial phase of the buildup of the component in layers, wherein the platform (3) is further designed to be guided from the building space (BR) through the hatch (2) into the outside region (AB).

5. System (200) for additive manufacturing, comprising a building space (BR), the device (100) according to one of the preceding claims, a fusing device (7) for building up the component (10) and a slide (11) for depositing layers of starting material (5) for the buildup in layers.

6. Method for the powder-bed-based additive manufacturing of a component by means of a device (100) according to one of the preceding claims and/or in a system (200) according to Claim 5, comprising the following steps:
- providing a first portion (10A) of the component (10) to be manufactured in layers in the building space (BR), and
- building up a second portion (10B) in layers, said portion adjoining the first portion (10A), wherein an already built-up subportion of the component (10) is guided in layers from the building space (BR) through the hatch (2) into the outside region (AB).

7. Method according to Claim 6, wherein the first portion (10A) of the component (10) is built up in layers in the building space (BR) without a subportion of the component (10) being guided into the outside region (AB) in the process.

8. Method according to Claim 6 or 7, wherein the first portion (10A) of the component (10) is a prefabricated component.

9. Method according to one of Claims 6 to 8, wherein a subportion of the component (10) which has already been guided out from the building space (BR) into the outside region (AB) is guided in layers along the guide direction (FR) by a guide and transferred in layers to guide the component.

10. Method according to one of Claims 6 to 9, wherein the component (10) is provided with a predetermined breaking structure (8) during the additive manufacturing in such a way that a subportion of the component (10) which has already been guided out from the building space (BR) into the outside region (AB) can be separated from the component (10) for a continuous buildup in layers.

11. Method according to one of Claims 6 to 10, wherein new starting material (5) for the component (10) is continuously fed to the building space (BR) for a continuous buildup in layers.

## Revendications

1. Dispositif (100) de fabrication additive par lit de poudre, comprenant :
une paroi (1) d'espace de construction, qui définit un espace (BR) de construction et qui est conçue pour séparer l'espace (BR) de construction d'une région (AB) extérieure, la paroi (1) de l'espace de construction ayant un sas (2) conçue pour guider une pièce (10) à construire couche par couche, pendant une fabrication additive, de l'espace (BR) de construction à une région (AB) extérieure en passant, au moins en partie, par le sas (2), de manière à ce que la pièce (10) puisse être construite suivant au moins une direction (FR) de guidage au-delà d'une dimension de l'espace (BR) de construction, la paroi (1) de l'espace de construction définissant latéralement l'espace (BR) de construction, la paroi (1) de l'espace de construction ayant une ouverture (6), par laquelle la pièce (10) peut passer dans la région (AB) extérieure, et dans lequel le sas (2) est constitué pour rendre étanche une pièce (10) disposée, au moins en partie, dans l'ouverture (6) vis-à-vis d'une matière (5) première pour la pièce (10) pendant la fabrication additive, ainsi que vis-à-vis d'une atmosphère de fabrication.

2. Dispositif (100) suivant l'une des revendications précédentes, qui a un guidage (9) conçu pour faire passer la pièce, pendant la fabrication additive, suivant la direction (FR) de guidage de l'espace (BR) de construction à la région (AB) extérieure, la direction (FR) de guidage faisant un angle compris entre 30 et 60° avec une direction définie par une direction (AR) de construction du procédé.

3. Dispositif (100) suivant la revendication 2, dans lequel le guidage (9) sert de dispositif d'appui et est constitué pour appuyer une partie partielle de la pièce (10), qui a été déjà sortie dans la région (AB) extérieure, pendant la fabrication additive.

4. Dispositif (100) suivant l'une des revendications précédentes, comprenant, en outre, une plateforme (3) conçue pour servir de substrat dans une phase initiale de la construction couche par couche de la pièce, la plateforme (3) étant constituée, en outre, pour être guidée de l'espace (BR) de construction à la région (AB) extérieure en passant par le sas (2).

5. Installation (200) de fabrication additive comprenant un espace (BR) de construction, le dispositif (100) suivant l'une des revendications précédentes, un dispositif (7) de consolidation pour la construction de la pièce (10), ainsi qu'un coulisseau de dépôt de couche de matière (5) première pour la construction couche par couche.

6. Procédé de fabrication additive par lit de poudre d'une pièce au moyen d'un dispositif (100) suivant l'une des revendications précédentes et/ou dans une installation (200) suivant la revendication 5, comprenant les stades suivants :
- on met une première partie (10A) de la pièce (10) à fabriquer couche par couche dans l'espace (BR) de construction, et
- on construit couche par couche une deuxième partie (10B) se raccordant à la première partie (10A), une partie partielle déjà construite de la pièce (10) étant guidée couche par couche de l'espace (BR) de construction à la région (AB) extérieure en passant par le sas (2).

7. Procédé suivant la revendication 6, dans lequel on construit couche par couche la première partie (10A) de la pièce (10) dans l'espace (BR) de construction sans pour autant faire passer une partie partielle de la pièce (10) dans la région (AB) extérieure.

8. Procédé suivant la revendication 6 ou 7, dans lequel la première partie (10A) de la pièce (10) est un élément préfabriqué.

9. Procédé suivant l'une des revendications 6 à 8, dans lequel on fait passer, suivant la direction (FR) de guidage couche par couche par un guidage, une partie partielle de la pièce (10), qui a été sortie déjà de l'espace (BR) de construction dans la région (AB) extérieure, et on la déplace couche par couche pour le guidage de la pièce.

10. Procédé suivant l'une des revendications 6 à 9, dans lequel on munit la pièce (10) pendant la fabrication additive d'une structure (8) destinée à se rompre, de manière à pouvoir, pour une construction couche par couche continue de la pièce (10), séparer une partie partielle de la pièce (10), qui a été déjà sortie de l'espace (BR) de construction dans la région (AB) extérieure.

11. Procédé suivant l'une des revendications 6 à 10, dans lequel on apporte en continu de la matière (5) première nouvelle pour la pièce (10) à l'espace (BR) de construction pour une construction continue couche par couche.
